# EUROPEAN PATENT APPLICATION

(11) **EP 1 801 690 A1**
(43) Date of publication of application: **27.06.2007**
(21) Application number: 05112807.2
(22) Date of filing: 22.12.2005
(51) Int. Cl.: G06F 3/033, H04N 5/445, H04B 1/20

(54) **Interactive television system with user-friendly interface**

(71) Applicant: Osmosys S.A., 1218 Grand-Saconnex (CH)
(72) Inventor: Smith-Chaigneau, Anthony, CH-1279, Chavannes de Bogis, Vaud (CH)
(74) Representative: Hudy, Ludwik

(57) **Abstract**

An interactive television system with a user-friendly interface has a remote controller (150), via which the user interacts with the television system. The remote controller (150) is configured individually for each application, for example by illuminating the keys used by the application. Beyond the remote controller (150) with a remote controller interface (151) and a user interface (160), the interactive television system consists of a set-top box (100), which comprises a signal receiving block (101), a demultiplexer (102) and a stream processor (110). The signal receiving block (101) receives digital television stream with interactive applications. The demultiplexer (102), which is coupled to the signal receiving block (101), provides interactive applications data. The stream processor (110) processes the digital television stream in response to user requests. The stream processor (110) has an application processor (112) for processing interactive applications data and a set-top box remote controller interface (115) for communicating with the remote controller (150). The remote controller (150) communicates with the stream processor via the user interface (160) for inputting user request. In the interactive television system, to the application processor (112) is coupled a remote controller manager (114) for reading interactive application interface configuration from the application processor (112) and generating a corresponding remote controller configuration. The remote controller also comprises a user interface controller (151) reading a remote controller configuration sent from the remote controller manager (114) and configuring the user interface (160) according to the remote controller configuration.

## Description

The present invention relates to an interactive television system with a user-friendly interface.

Interactive applications are one of the key factors of the increased popularity of digital television. Applications such as extended information services, advertisements, e-mail applications, Internet browsers, simple games or voting applications are highly appreciated by many viewers.

However, there is a large group of viewers who find the use of interactive applications difficult. Each application has its user interface designed for the particular functionality. Many viewers are accustomed to using only the basic functions of the remote controller, therefore it may be hard for them to get accustomed to a particular application interface.

The European patent application EP1061490 "Digital interconnection of electronics entertainment equipment" presents a remote control unit with arrangement of keys adjustable to the type of a device it is controlling. Once the device type is selected, a certain set of keys is displayed. However, the device is static, i.e. it can be used to operate a limited number of devices, which is predefined on the production stage.

Therefore, the users of interactive television applications have to learn and get accustomed to the interface of each application they wish to use. Thus, there exists a need for an improved user interface for interactive applications, which would be user-friendly especially for inexperienced digital television viewers.

The present invention provides an interactive television system with a user-friendly interface. This system has a remote controller, via which the user interacts with the television system. The remote controller is configured individually for each application, for example by illuminating the keys used by the application. Beyond the remote controller with a remote controller interface and a user interface, the interactive television system consists of a set-top box, which comprises a signal receiving block, a demultiplexer and a stream processor, whereby the signal receiving block receives digital television stream with interactive applications, the demultiplexer is coupled to the signal receiving block and provides interactive applications data, the stream processor processes the digital television stream in response to user requests and has an application processor coupled to the demultiplexer and processing interactive applications data and has a set-top box remote controller interface for communicating with the remote controller, and whereby the remote controller communicates with the stream processor and the user interface for inputting user commands. In the interactive television system, to the application processor is coupled a remote controller manager included in the stream processor for reading interactive application interface configuration from the application processor and generating a corresponding remote controller configuration, whereas the remote controller further comprises a user interface controller reading a remote controller configuration from the remote controller manager and configuring the user interface according to the remote controller configuration.

Preferably, the user interface comprises a keyboard and appearance of the keyboard is configured by the user interface controller.

It is advantageous that the keyboard is a touch display and the appearance in this case is configured by specifying a displayed picture and/or the keyboard comprises a set of illuminable keys, and the appearance is configured by illuminating the keys.

The user interface can comprise a display, which is configured by the user interface controller and/or a buzzer, which is activated by the user interface controller and/or a loudspeaker, and the user interface controller configures the sound output through the loudspeaker.

The idea of the invention is also that a method for providing interface to interactive television applications in an interactive television system with configuration described above comprises the steps of:
- reading interactive application interface configuration upon detecting interactive application status change by the signal receiving block of the set-top box, generating a corresponding remote controller configuration, and transmitting the remote controller configuration to the remote controller; and
- reading the remote controller configuration by the remote controller, and accordingly configuring the user interface.

The invention will now be described by way of example and with reference to the accompanying drawings in which:
Fig. 1 presents an interactive television system;
Fig. 2 presents a remote controller;
Fig. 3 presents a schematic of communication between elements of the system; and
Fig. 4 presents a flow block diagram of a general procedure of operation of the system.

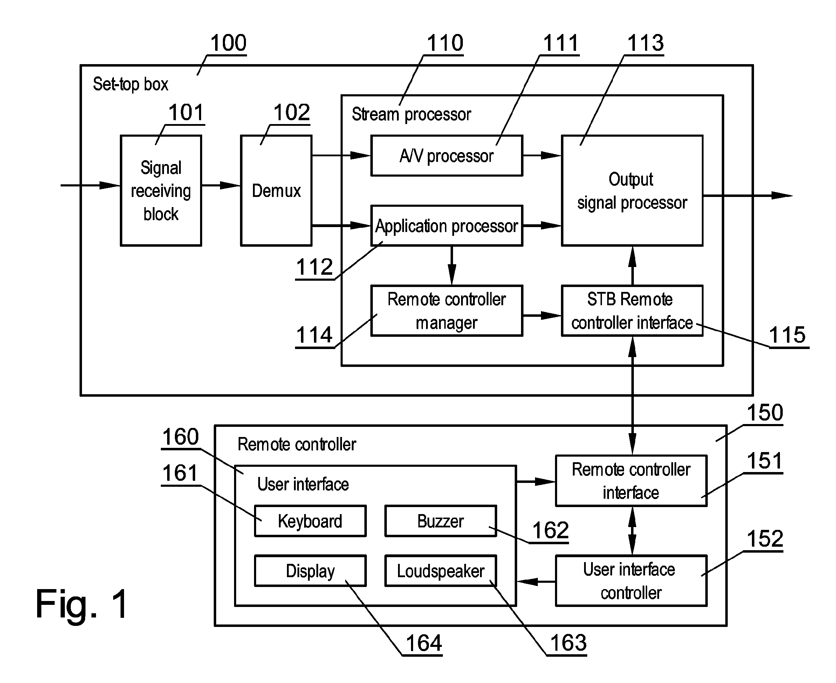

Fig. 1 presents an interactive television system according to the invention. The set-top box 100 comprises a signal receiving block, which receives digital television stream with interactive applications. The "interactive applications" term is to be understood as any data additional to the audio/video data, providing additional content to the user and requiring interaction with the user. The interaction may involve only a single step, such as inputting a "confirm" command to indicate that a user is interested in displaying additional data, or a set of possible commands to navigate a sophisticated application. Therefore, the data may describe a simple application displaying information or more complex applications such as extended information services, advertisements, e-mail communicators, Internet browsers, games or voting applications. The interactive applications may be prescribed for a particular channel, i.e. available only when a particular channel is requested, for example a voting application prescribed for a currently broadcast show. Alternatively, the interactive applications may be channel-independent, for example a game available irrespectively on the channel which is currently received.

The received digital television stream is a multiplex of audio/video data of various channels and additional data, such as interactive applications. A demultiplexer 102 is used to demultiplex particular data, and provide requested data to other blocks of the system, including audio/video data and interactive applications data. The embodiment presented shows only two blocks requesting data from the demultiplexer, but in a real embodiment the number of such blocks may be greater. The data to be demultiplexed and provided to a particular block may be identified in case of MPEG-type stream by a PID number of packets in which they are transmitted.

The data from the demultiplexer are input to a stream processor 110 responsible for stream processing in response to user requests. For example, in response to a user request for displaying a particular channel, the stream processor 110 may read available channel information, request the stream receiving block to tune to a particular stream, request the demultiplexer to provide particular data to an audio/video processor 111, and check whether there any interactive applications available and request those applications data to be provided to an application processor 112. The stream processor may comprise various functional blocks, but only the blocks most important for the invention have been shown. For example, it may also comprise a stream descrambler for descrambling the received stream. The A/V processor 111 processes audio/video data, for example decodes MPEG-compressed data to a format acceptable by an output receiver. The application processor 112 processes interactive applications data, for example executes the application code and provides audio/video data related to applications in a format acceptable by an output receiver. The application processor 112 may also communicate with other blocks, such as a return channel interface (not shown in the drawing) for communicating application data such as replies to advertising, banking application data, voting data or game results. In particular, the application processor analyzes the user interface provided by the application and provides application interface configuration to a remote controller manager for configuring the remote controller. An output signal processor 113 collects data generated by other blocks and provides an output signal to the user.

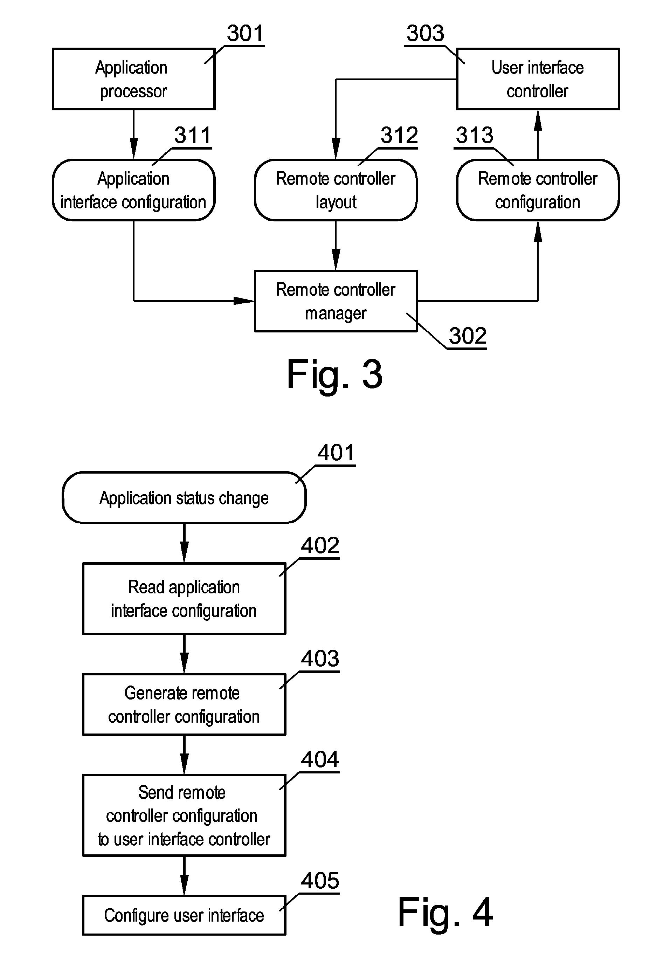

A set-top box remote controller interface 115 is used for two-way communication with the remote controller. A remote controller manager 114 reads applications interface configuration and generates a corresponding remote controller configuration, according to the procedure shown in Fig. 4. The remote controller configuration is transmitted to the remote controller via the set-top box remote controller interface 115.

The remote controller 150 comprises a remote controller interface 151 for communicating with the set-top box 100. It further comprises a user interface 160 for communicating with the user. The user interface 160 may comprise several elements, such as a keyboard 161, a buzzer, also called a vibrating module 162, an audio output 163, or a display 164. The keyboard 161 may be embodied as a set of keys or as a touch display.

A user interface controller 152 of the remote controller 150 reads from the remote controller manager 114 of the set-top box 100 remote controller configuration data and accordingly configures the user interface 160. The user interface 160 is configured in such a way as to illuminate the functions available for the user at a given time, such as the possibility to execute an interactive application or the most important functions of the application. This may be done by activating specific keys of a keyboard. For example, if the keyboard 161 is a touch display, only the keys available for controlling the applications may be activated, by activating specific regions, corresponding to those keys, of the touch display. The activating of the regions may be done by illuminating, changing the color, flashing, dimming the remaining regions or displaying only the specific regions. In case the keyboard comprises a set of light-up keys, the keys may be activated by lighting them up. Furthermore, some functions of the application may be communicated to the user via the display 164, by presenting a specific text or graphics message on the display. In case the user interface comprises the buzzer 162, it may be activated to signal availability of an interactive application, the completion of a specific task or an incoming message from the application. Similarly, the audio output, i.e. a loudspeaker, may output a specific sound message.

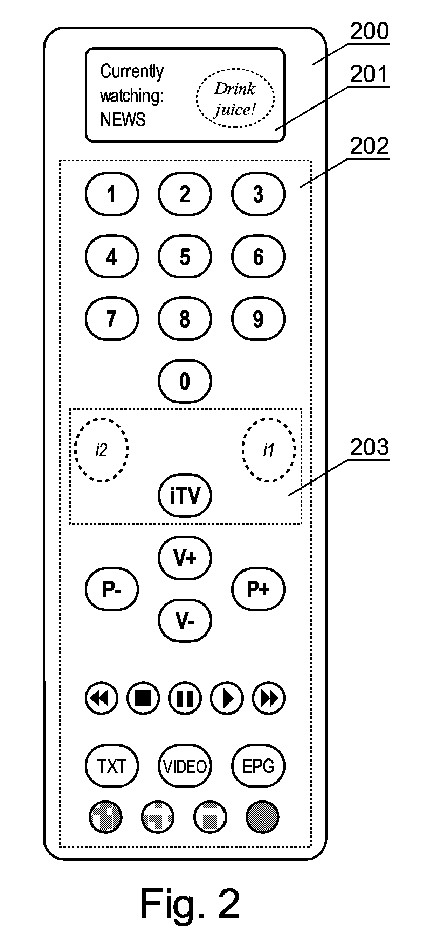

Fig. 2 presents an exemplary embodiment of a remote controller 200. The remote controller comprises a display 201 for displaying text and graphics messages, a keyboard 202 comprising a set of light-up keys and a touch display 203.

Fig. 3 presents a schematic of communication between the elements of the system. The application processor 301 provides a data structure defining interactive application interface configuration 311 to a remote controller manager 302. The remote controller manager 302 reads the interactive application interface configuration 311 and generates a data structure defining a corresponding remote controller configuration 313, which is next read by the user interface controller 303. The user interface controller 303 may provide a data structure defining remote controller layout 312 to the remote controller manager 302, which could be useful for generating the remote controller configuration 313. Alternatively, in case the set-top box uses a predefined remote controller, the remote controller layout 312 may be pre-installed in the set-top box memory instead of being provided by the user interface controller.

Depending on the complexity of the system and the functionality of the remote controller, different data structures may be used, of which two examples will be given.

In a first embodiment, the remote controller comprises a keyboard with a set of keys, some of which can be activated, and a buzzer module. In such a configuration, the data structure defining the remote controller layout may comprise information on remote controller keys and their corresponding default functions. For example, the structure may have the following contents:
(101, letf); (102, right) ; (103, up) ; (104, down) ; (110; 1) ; (111, 1) ; ... ; (119, 9) ; (121, iTV) ; (122, P+) ; (123, P-) ; (124, V+) ; (125, V-) ; (131, red) ; (132, green) ; (133, yellow) ; (134, blue) ; (141, help) ; (201, buzzer)

In the above structure, the key code 101 has a default function of "left arrow", the key code 102 has a default function of "right arrow", the key codes 110-119 correspond to numerical keys 0-9, the key code 121 corresponds to an "iTV" button used for executing interactive applications, the key codes 122-123 correspond to channel change buttons, the key codes 124-125 correspond to volume change buttons, the key codes 131-134 correspond to color buttons, and the key code 141 corresponds to a help button. The list is not limiting, the exact implementation may have a smaller or larger set of keys defined.

The data structure of the interactive application interface configuration defines a list of functions that can be executed at a given time. For example, in case of a voting application the user, at the time of voting, may select one of two votes, ask for help or exit the application. Moreover, at the time when the voting application becomes active, a buzzer is to be activated to indicate the application availability to the user. Then, the structure of the interactive application interface configuration may have the following contents:
(red) ; (green) ; (help) ; (iTV) ; (buzzer)

The corresponding remote controller configuration will be generated according to the remote controller layout and will have the following contents:
(131); (132); (141); (121); (201)

The remote controller manager, upon receiving a remote controller configuration, will illuminate the keys defined in the configuration and activate the buzzer for a short time. In consequence, the user will receive a precise indication of which keys can be used in the currently active application.

In the second embodiment, the remote controller comprises a configurable touch display on which various keys can be displayed and an audio output. In such a configuration, the data structure defining the remote controller layout may comprise information on the parameters of the touch display, such as the resolution and color palette, and the availability of the audio output. For example, the structure may have the following contents:
(touch_display); (audio_out)

The data structure of the interactive application interface configuration defines the appearance of the display and the sounds to be played. For example, three buttons may be displayed on the screen that are shown in Fig. 2 as element 203. Then, the structure of the interactive application interface configuration may have the following contents:
(display_bitmap) ; (sound1)

The corresponding remote controller configuration will be generated according to the remote controller layout. The display_bitmap data will be read and converted to the resolution and color depth of the remote controller display. Similarly, the sound for the audio output will be converted to appropriate format. The corresponding remote controller configuration will have the following contents:
(display_bitmap) ; (sound1)

The remote controller manager, upon receiving a remote controller configuration, will display the display_bitmap data and play the sound data. When a user touches a specific part of the display, the x and y coordinates of the touched point are read and transmitted to the interactive application. In case the user touched a point at which no button was displayed, the application may simply disregard such input and respond only to the inputs corresponding to a displayed button.

Various other embodiments may be constructed basing on the above description. For example, the remote controller may comprise both: a touch display and a set of keys, as shown in Fig. 2. In such a case the data structures defining the interfaces will be a combination of the above-described structures.

Fig. 4 presents a general procedure of operation of the system. Upon detecting interactive application status change in step 401, the interactive application interface configuration is read by the remote controller manager from the application processor in step 402. In step 403, the remote controller manager generates a corresponding remote controller configuration, basing on the remote controller layout. In step 404 the remote controller configuration is sent to the user interface controller. In step 405, the user interface controller configures the user interface of the remote controller. In consequence, the user is presented with the current interface of the interactive application.

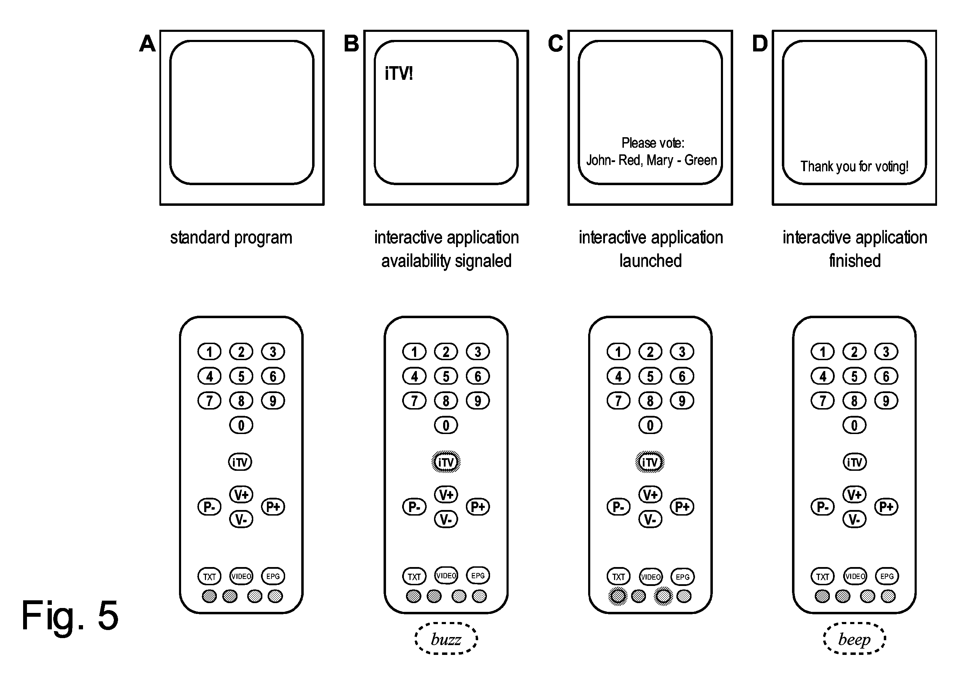

Fig. 5 presents an example of system operation while executing an interactive voting application.

The top row shows the screen of a TV set connected to the set-top box. The middle row shows action descriptions. The bottom row presents the RCU appearance. The RCU presented here has a keyboard with illuminable keys.

In situation "A", a standard TV program is received and no additional information is visible on the screen.

In situation "B", an interactive application has been detected in the stream. This is signaled both by an "iTV" icon on the screen and a illuminated "iTV" button of the remote controller. The illuminated button suggests to the user how to execute the application - simply by pressing the illuminated button. Moreover, the buzzer module has been activated for a short time.

Situation "C" occurs after the user has pressed the "iTV" button and activated the application. The application has been thus downloaded and executed. The TV screen shows voting instructions: "Please press a red button to vote on John, and a green button to vote on Mary". The "iTV", the red and green buttons of the RCU are active.

Situation "D" occurs after the user has pressed a red or green button to vote or the "iTV" button to exit the application. The TV screen shows information "Thank you for voting". A command has been sent to RCU to deactivate the preciously activate keys (red, green and iTV). The RCU speaker produced a short "beep" sound to inform the user that the application is closed.

## Claims

1. An interactive television system comprising a set-top box and a remote controller, whereby the set-top box comprises a signal receiving block, a demultiplexer and a stream processor and whereby the signal receiving block receives digital television stream with interactive applications and the demultiplexer, coupled to the signal receiving block, provides interactive applications data, whereas the stream processor processessing the digital television stream in response to user requests has an application processor coupled to the demultiplexer and processing interactive applications data and a set-top box remote controller interface for communicating with the remote controller, and whereby the remote controller communicates with the stream processor and has a user interface for inputting user requests, **characterized in that** to the application processor (112) is coupled a remote controller manager (114) reading interactive application interface configuration from the application processor (112) and generating a corresponding remote controller configuration, and that the remote controller (150) further comprises a user interface controller (152) reading a remote controller configuration from the remote controller manager (114) and configuring the user interface (160) according to the remote controller configuration.

2. The system according to claim 1, **characterized in that** the user interface (160) comprises a keyboard (161) and appearance of the keyboard (161) is configured by the user interface controller (152).

3. The system according to claim 2, **characterized in that** the keyboard (161) is a touch display and the appearance of the keyboard (161) is configured by specifying a displayed picture.

4. The system according to claim 2, **characterized in that** the keyboard (161) comprises a set of illuminable keys, and the appearance of the keyboard (161) is configured by illuminating the keys.

5. The system according to claim 1, **characterized in that** the user interface (16) comprises a display (164), and the appearance of the display (164) is configured by the user interface controller (152) by specifying a displayed picture .

6. The system according to claim 1, **characterized in that** the user interface (160) comprises a buzzer (162), which is activated by the user interface controller (152).

7. The system according to claim 1, **characterized in that** the user interface (160) comprises a loudspeaker (163), and the user interface controller (152) configures the sound output through the loudspeaker (163).

8. A method for providing interface to interactive television applications in an interactive television system, the system comprising a set-top box with an application processor processing interactive applications data and a remote controller with a user interface for inputting user commands, the method comprising the steps of
- in the set-top box, reading interactive application interface configuration upon detecting interactive application status change, generating a corresponding remote controller configuration, and transmitting the remote controller configuration to the remote controller;
- in the remote controller, reading the remote controller configuration and accordingly configuring the user interface.

9. The method according to claim 8, **characterized in that** the user interface comprises a keyboard and the user interface is configured by adapting the appearance of the keyboard.

10. The method according to claim 9, **characterized in that** the keyboard is a touch display and the appearance is configured by specifying a displayed picture.

11. The method according to claim 9, **characterized in that** the keyboard comprises a set of illuminable keys, and the appearance is configured by illuminating the keys.

12. The method according to claim 8, **characterized in that** the user interface comprises a display, and the user interface is configured by specifying the display picture.

13. The method according to claim 8, **characterized in that** the user interface comprises a buzzer, and the user interface is configured by activating the buzzer.

14. The method according to claim 8, **characterized in that** the user interface comprises a loudspeaker, and the user interface controller is configured by specifying the sound output through the loudspeaker.
